# EUROPÄISCHE PATENTSCHRIFT

(11) **EP 3 211 773 B1**
(45) Veröffentlichungstag und Bekanntmachung des Hinweises auf die Patenterteilung: **28.07.2021**
(21) Anmeldenummer: 17000202.6
(22) Anmeldetag: 09.02.2017
(51) Int. Cl.: H02K 15/085, H02K 15/095

(54) **VERFAHREN ZUR HERSTELLUNG EINES STATORS DURCH NADELWICKELN**
METHOD FOR THE PRODUCTION OF A STATOR BY PIN WINDING
PROCÉDÉ DE FABRICATION D'UN STATOR PAR ENROULEMENT PAR AIGUILLE

(30) Priorität: 25.02.2016 DE 102016002207
(43) Veröffentlichungstag der Anmeldung: 30.08.2017
(73) Patentinhaber: Audi AG, 85045 Ingolstadt (DE)
(72) Erfinder: Richnow, Jan, DE - 80538 München (DE); Stenzel, Peer, DE - 85051 Ingolstadt (DE); Westermaier, Christian, DE - 85229 Markt Indersdorf (DE)
(74) Vertreter: Eickmeyer, Dietmar

(56) Entgegenhaltungen:
- EP-A1- 1 245 072
- EP-A2- 1 309 072
- EP-A2- 1 467 466
- DE-A1-102008 042 242
- DE-T2- 60 107 381
- US-A- 4 074 418
- US-A1- 2011 210 642

## Beschreibung

Die Erfindung betrifft ein Verfahren zur Herstellung eines Stators für eine elektrische Maschine, wobei durch Nadelwickeln mit einer Bewicklungseinrichtung mehrere Wicklungen eines Spulendrahtes auf radial von einem im Wesentlichen hohlzylinderförmigen Statorkörper abstehende Statorzähne gewickelt werden, wobei die Bewicklungseinrichtung einen Statorträger und eine Drahtführdüse zur Führung des Spulendrahtes zu dem Statorkörper umfasst, wobei der Statorkörper drehfest auf dem Statorträger und der aus der Drahführdüse geführte Spulendraht an dem Statorkörper und/oder an dem Statorträger befestigt wird, wonach die Wicklungen des Spulendrahtes auf die Statorzähne gewickelt werden, indem wiederholt abwechselnd Rotationen des Statorträgers um eine axial bezüglich des Statorkörpers verlaufende Rotationsachse und Verschiebungen der Drahtführdüse zur Führung des Spulendrahtes durch jeweils eine zwischen jeweils zwei der Statorzähne verlaufende Nut durchgeführt werden. Daneben betrifft die Erfindung eine Bewicklungseinrichtung.

Im Rahmen der Herstellung von elektrischen Maschinen ist es häufig erforderlich, elektrische Leiter in einen Stator einzubringen, um Spulen der elektrischen Maschine auszubilden. Diese Leiter sind typischerweise zu Spulengruppen zusammengefasst, die parallel oder seriell verschaltet sein können und verschiedenen Phasen zugeordnet sein können. Eine Möglichkeit, einen Spulendraht in einen Stator einzubringen, ist das Nadelwickeln, bei dem ein Statorkörper auf einen Statorträger aufgebracht ist und Wickelbewegungen einer Drahtführdüse bezüglich des Statorkörpers durch eine Kombination von Verschiebungen der Drahtführdüse entlang einer Verschiebestrecke und von Rotation des Statorträgers um eine Rotationsachse erreicht werden.

Die US 2011 0210642 A1 offenbart eine Bewicklungseinrichtung zum Aufbringen mehrerer Wicklungen eines Spulendrahtes auf radial von einem im Wesentlichen hohlzylinderförmigen Statorkörper abstehende Statorzähne, wobei die Bewicklungseinrichtung einen Statorträger, an dem der Statorkörper drehfest befestigbar ist, eine Drahtführdüse zur Führung eines Spulendrahtes zu dem Statorkörper, eine Verschiebeeinrichtung zur Verschiebung der Drahtführdüse, eine Rotationseinrichtung zur Rotation des Statorträgers um eine Rotationsachse und eine Steuereinrichtung zur Steuerung der Verschiebeeinrichtung und der Rotationseinrichtung umfasst.

Nachteilig an dieser Wickeltechnik ist, dass mit ihr nur relativ einfache Wickelschemata realisiert werden können. Zur Bereitstellung parallel zu schaltender Wicklungen oder mehrerer Spulengruppen sind mehrere separate Wickelvorgänge erforderlich.

Der Erfindung liegt daher die Aufgabe zugrunde, ein Verfahren zur Herstellung eines Stators durch Nadelwickeln anzugeben, dass demgegenüber bezüglich der Herstellung von Statoren mit komplexen Wickelschemata verbessert ist.

Die Aufgabe wird erfindungsgemäß durch ein Verfahren der eingangs genannten Art gelöst, wobei der Statorträger mehrere Haltevorrichtungen umfasst, wobei zwischen wenigstens zwei der Wicklungen des Spulendrahtes um die jeweiligen Statorzähne der Spulendraht durch eine Verschiebung der Drahtführdüse radial von dem Statorkörper weggeführt wird, wonach er durch eine Rotation des Statorträgers um die Rotationsachse entlang einer von dem Statorkörper abgewandten Außenseite wenigstens einer der Haltevorrichtungen geführt wird.

Erfindungsgemäß wird vorgeschlagen, den Spulendraht im Rahmen der Wicklung einmal oder mehrmals zwischen jeweils zwei Wicklungen von dem Statorkörper beziehungsweise den daran angeordneten Statorzähnen wegzuführen und ihn um wenigstens eine der Haltevorrichtungen zu führen. Dies ermöglicht es einerseits, wenn die Wicklungen auf verschiedene, voneinander beabstandete Statorzähne bzw. Statorzahnpaare gewickelt werden sollen, den Spulendraht während des Wechsels zwischen den Wicklungen beabstandet von dem Statorkörper zu führen. Die Drahtführung zwischen den Wicklungen stört daher das Aufbringen späterer Wicklungen nicht. Andererseits erleichtert es dieses Spannen zu den Haltevorrichtungen, den Spulendraht nach dem Wickelvorgang zu trennen. Es wird somit ermöglicht, Wicklungen für anschließend parallel oder separat zu verschaltende Spulen gemeinsam mit einem durchgängigen Spulendraht zu wickeln und den Spulendraht erst nach der Wicklung zu trennen.

Zum Aufbringen einer Wicklung erfolgt die Verschiebung der Drahtführdüse entlang einer im Wesentlichen axial bezüglich des Spulenkörpers verlaufenden Verschiebestrecke, womit die Drahtführdüse durch die Nuten des Stators zwischen den Statorzähnen führbar ist. Durch eine Rotation des Statorträgers wird die Drahtführdüse und somit der Spulendraht anschließend vor oder hinter den Statorzähnen vorbeigeführt. Der Spulendraht kann an den Enden des Stators durch ein während des Wickelvorgangs genutztes, axial in den Stator eingebrachtes und dort verklemmtes Wickelwerkzeug gehaltert sein. Um den Spulendraht an dem Wickelwerkzeug zu haltern, kann an einem oder an beiden Enden der jeweiligen Nut die Drahtführdüse zusätzlich radial verschoben werden und/oder die Drahtführdüse kann verschwenkt werden.

Falls kein anderes Bezugssystem angegeben ist, beziehen sich alle Richtungsangaben auf ein Koordinatensystem in Zylinderkoordinaten, das bezüglich des Statorkörpers vorgegeben ist.

Die Haltevorrichtungen können stiftartig ausgebildet sein und sich in Axialrichtung des Statorköpers erstrecken. Die Außenseite der jeweiligen Haltevorrichtung kann dabei derart geformt sein, dass der entlang der Außenseite geführte Spulendraht durch die Haltevorrichtung gehaltert ist, das heißt im Rahmen der darauf folgenden Wicklungen des Spulendrahtes nicht von ihr abrutschen kann.

Durch das erfindungsgemäße Verfahren kann ein Stator hergestellt werden, der mehrere parallelgeschaltete und/oder unabhängig voneinander beschaltbare Gruppen der Wicklungen umfasst, wobei die Wicklungen innerhalb jeder Gruppe in Serie geschaltet sind, wobei die Wicklungen wenigstens zweier der Gruppen zunächst gemeinsam mit einem durchgängigen Spulendraht gewickelt werden, wobei die Wicklungen jeweils einer Gruppe zeitlich aufeinanderfolgend gewickelt werden, wobei der Spulendraht nach der jeweils letzten Wicklung einer Gruppe an der Außenseite wenigstens einer der Haltevorrichtungen vorbeigeführt wird. Durch dieses Vorgehen wird eine Trennung des Spulendrahtes zwischen den einzelnen Gruppen erleichtert, da eine Trennung beabstandet von dem Statorkörper erfolgen kann.

Als Haltevorrichtungen können solche verwendet werden, die auf der Außenseite mehrere separate konkave Aufnahmebereiche aufweisen, in die der Spulendraht einlegbar ist. Der Spulendraht kann nach wenigstens zwei verschiedenen Wicklungen an der Außenseite der gleichen Haltevorrichtung vorbeigeführt werden, wobei die relative Lage der Haltevorrichtung und der Drahtführdüse derart angepasst wird, dass der Spulendraht in verschiedenen Aufnahmebereichen abgelegt wird. Hierzu kann die Drahtführdüse axial verschoben werden. Alternativ oder ergänzend ist es möglich, dass der Statorträger in Axialrichtung verschoben wird, um die relative Lage der jeweiligen Haltevorrichtung und der Drahtführdüse anzupassen. Die Aufnahmebereiche können in der Form von Nuten ausgebildet sein, in die der Spulendraht einlegbar ist. Die Nuten können im Wesentlichen in Umfangsrichtung des Statorkörpers verlaufen.

Es kann ein Statorträger verwendet werden, der zusätzlich eine Umlenkvorrichtung oder mehrere Umlenkvorrichtungen umfasst, wobei wenigstens einmal während des Wickelns der Wicklungen, nachdem der Spulendraht an der Außenseite einer der Haltevorrichtungen vorbeigeführt wurde, der Spulendraht durch eine Verschiebung der Drahtführdüse entlang der Verschiebestrecke in Richtung des Statorkörpers geführt wird, wonach er durch eine Rotation des Statorträgers um die Rotationsachse entlang einer dem Statorkörper zugewandten Innenseite der Umlenkvorrichtung oder wenigstens einer der Umlenkvorrichtungen geführt wird. Der Spulendraht kann durch eine Kombination von Verschiebungen der Drahtführdüse und Rotationen des Statorträgers wenigstens einmal vollständig um die Umlenkvorrichtung geführt werden. Nach dem ein oder mehrmaligen Vorbeiführen an der Innenseite der jeweiligen Umlenkvorrichtung kann der Spulendraht durch eine entsprechende Verschiebung der Drahtführdüse und durch Rotation des Statorträgers an der Außenseite einer in Umfangsrichtung zu der Umlenkvorrichtung benachbarten Haltevorrichtung vorbeigeführt werden.

Der Spulendraht kann nach dem Wickeln an wenigstens einer Trennstelle zwischen jeweils zwei der Wicklungen automatisch durch eine Trennvorrichtung getrennt werden. Die Trennung kann vorzugsweise an einer Trennstelle durchgeführt werden, an der der Spulendraht zwischen zwei Haltevorrichtungen oder zwischen einer Haltevorrichtung und einer Umlenkvorrichtung gespannt ist oder an der der Spulendraht über eine Ausnehmung einer Umlenkvorrichtung oder einer Haltevorrichtung geführt ist. Ein Trennen des Spulendrahtes an Stellen, an denen er beabstandet von dem Statorkörper beziehungsweise von den Statorzähnen gespannt ist beziehungsweise über eine Ausnehmung geführt ist, ermöglicht ein besonders einfaches Trennen des Spulendrahtes durch eine relativ einfach ausgebildete Trennvorrichtung.

Zwischen wenigstens zwei der Wicklungen des Spulendrahtes um die jeweiligen Statorzähne kann der Spulendraht durch eine Verschiebung der Drahtführdüse axial von dem Statorkörper weggeführt werden, wonach eine vorgegebene Solllänge des Spulendrahtes beabstandet von dem Statorköper zwischen den Haltevorrichtungen und/oder der Umlenkvorrichtung oder den Umlenkvorrichtungen verspannt wird. Es kann gewünscht sein, dass zur Kontaktierung der Wicklungen beziehungsweise der aus den Wicklungen gebildeten Spulen Kontakte mit einer vorgegebenen Mindestlänge bereitgestellt werden. Wird der Spulendraht zwischen den Haltevorrichtungen beziehungsweise der Umlenkvorrichtung verspannt, kann bei einer entsprechenden Trennung des Spulendrahtes durch den Spulendraht selbst ein Kontakt mit der vorgegebenen Solllänge bereitgestellt werden. Der Spulendraht kann hierbei derart verspannt werden, dass nach einem Trennen auf beiden Seiten der Trennstelle ein Kontakt mit einer jeweils vorgegeben Solllänge gebildet wird. Das Verspannen kann erfolgen, indem der Spulendraht an der Außenseite mehrerer der Haltevorrichtungen vorbeigeführt wird, um mehrere Haltevorrichtungen gewickelt wird, mehrfach zwischen Haltevorrichtungen und Umlenkvorrichtungen gespannt wird oder Ähnliches.

Neben dem erfindungsgemäßen Verfahren betrifft die Erfindung eine Bewicklungseinrichtung zum Aufbringen wenigstens einer Wicklung eines Spulendrahtes auf radial von einem im Wesentlichen hohlzylinderförmigen Statorkörper abstehende Statorzähne, wobei die Bewicklungseinrichtung einen Statorträger, an dem der Statorkörper drehfest befestigbar ist, eine Drahtführdüse zur Führung eines Spulendrahtes zu dem Statorkörper, eine Verschiebeeinrichtung zur Verschiebung der Drahtführdüse, eine Rotationseinrichtung zur Rotation des Statorträgers und eine Steuereinrichtung zur Steuerung der Verschiebeeinrichtung und der Rotationseinrichtung umfasst, wobei an dem Statorträger mehrere Haltevorrichtungen angeordnet sind, und wobei die Bewicklungseinrichtung zur Durchführung des erfindungsgemäßen Verfahrens ausgebildet ist.

Die vorangehend erläuterten Merkmale des erfindungsgemäßen Verfahrens können mit den dort genannten Vorteilen entsprechend auf die erfindungsgemäße Bewicklungseinrichtung übertragen werden. Insbesondere ist die Steuereinrichtung dazu ausgebildet, die Verschiebeeinrichtung und die Rotationseinrichtung zur Durchführung der bezüglich des erfindungsgemäßen Verfahrens erläuterten Rotationen des Statorträgers und Verschiebungen der Drahtführdüse anzusteuern. Entsprechend lassen sich auch die im Folgenden erläuterten Merkmale der Bewicklungseinrichtung entsprechend auf das erfindungsgemäße Verfahren übertragen.

Die Bewicklungseinrichtung kann eine Trennvorrichtung umfassen, um den Spulendraht nach dem Aufbringen der mehreren Wicklungen an einer Trennstelle zu Trennen. Die Trennung kann wie vorangehend zum erfindungsgemäßen Verfahren erläutert erfolgen, wobei die Steuereinrichtung eingerichtet sein kann, um die Trenneinrichtung zur Durchführung der entsprechenden Schritte anzusteuern.

Die Haltevorrichtungen können kreisförmig um die Rotationsachse angeordnet sein. Sie können gleichmäßig entlang des Radiuses des Kreises verteilt sein. Der Kreisradius kann größer als ein maximaler Radius des Stators sein.

An dem Statorträger kann wenigstens eine Umlenkvorrichtung angeordnet sein, wobei der Abstand der Umlenkvorrichtung von der Rotationsachse geringer ist als der Abstand der Haltevorrichtungen von der Rotationsachse.

Die Umlenkvorrichtung kann an ihrer der Rotationsachse zugewandten Innenseite eine Ausnehmung aufweisen, über die der Spulendraht spannbar ist. Bei dieser Ausnehmung kann es sich insbesondere um eine Nut oder ähnliches handeln. Eine entsprechende Ausnehmung erleichtert das Trennen des Spulendrahte an dieser Trennstelle.

Wenigstens ein Abschnitt einer von der Rotationsachse abgewandten Außenfläche der Haltevorrichtung kann jeweils einzeln oder gemeinsam mit dem Statorträger wenigstens einen konkaven Aufnahmebereich für den Spulendraht bilden. Beispielsweise kann die Außenfläche angeschrägt sein, so dass die Außenfläche mit einer Fläche des Statorträgers, an dem die Haltevorrichtung angeordnet ist, einen spitzen Winkel einschließt. Hierdurch kann erreicht werden, dass ein an der Außenseite der Haltevorrichtung vorbeigeführter Spulendraht nicht von dieser abrutscht.

Weitere Vorteile und Einzelheiten der Erfindung zeigen die folgenden Ausführungsbeispiele sowie die dazugehörigen Zeichnungen. Hierbei zeigen schematisch:
- Figuren 1-3: ein Ausführungsbeispiel einer erfindungsgemäßen Bewicklungseinrichtung sowie die Nutzung dieser Bewicklungseinrichtung in zwei Ausführungsbeispielen des erfindungsgemäßen Verfahrens,
- Fig. 4: ein zweites Ausführungsbeispiel einer erfindungsgemäßen Bewicklungseinrichtung sowie die Durchführung eines dritten Ausführungsbeispiels des erfindungsgemäßen Verfahrens durch diese Bewicklungseinrichtung, und
- Fig. 5: eine Detailansicht eines dritten Ausführungsbeispiels einer erfindungsgemäßen Bewicklungseinrichtung.

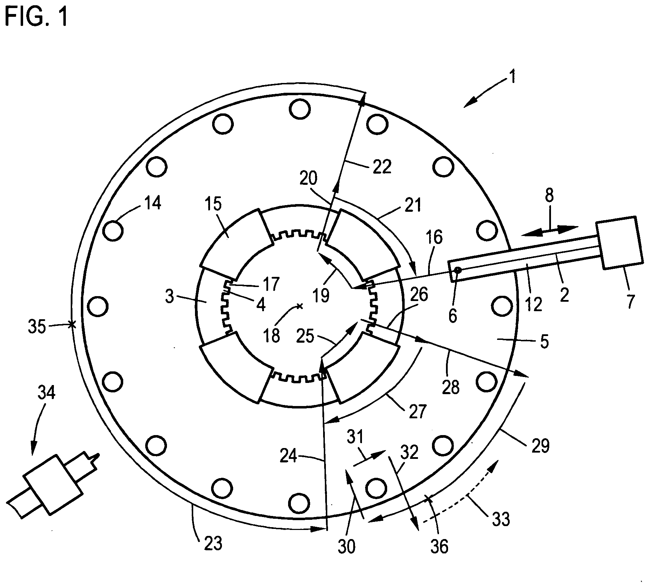

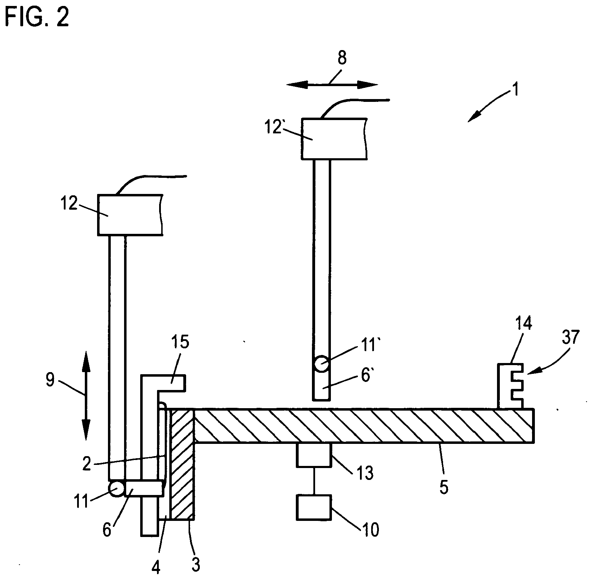

Fig. 1 zeigt eine Bewicklungseinrichtung 1 zum Aufbringen mehrerer Wicklungen eines Spulendrahtes 2 auf radial von einem im wesentlichen zylinderförmigen Statorkörper 3 abstehende Statorzähne 4. Fig. 2 zeigt eine geschnittene Detailansicht dieser Bewicklungseinrichtung 1. Der Aufbau der Bewicklungseinrichtung 1 sowie ein Ausführungsbeispiel eines Verfahrens zur Herstellung eines Stators durch Nadelwickeln mit dieser Bewicklungseinrichtung 1 wird im Folgenden mit Bezug auf beide Zeichnungen beschrieben.

Die Bewicklungseinrichtung 1 umfasst einen Statorträger 5, an dem der Statorkörper 3 zur Bewicklung des Stators drehfest befestigt wird. Dies erfolgt durch nicht gezeigte Befestigungseinrichtungen, beispielsweise durch ein Verschrauben oder ein Verklemmen. Der Spulendraht 2 wird durch eine Drahtführdüse 6 zu dem Statorkörper 3 beziehungsweise zu den daran angeordneten Statorzähnen 4 geführt. Hierzu ist die Drahtführdüse 6 durch eine Verschiebeeinrichtung 7 verschiebbar. Eine Verschiebung ist einerseits in Radialrichtung bezüglich des Statorkörpers 3 möglich, wie durch den Doppelpfeil 8 dargestellt ist, und andererseits in Axialrichtung des Statorkörpers 3, wie durch den Doppelpfeil 9 dargestellt ist.

Um die Verschiebung der Drahtführdüse 6 durchzuführen, steuert eine Steuereinrichtung 10 die Verschiebeeinrichtung 7. Die beiden Verschieberichtungen können durch separate Aktoren ermöglicht werden, es ist jedoch auch möglich, das die Drahtführdüse 6 durch die Verschiebeeinrichtung 7 entlang einer nichtgezeigten Zwangsführung geführt wird, wodurch je nach der aktuellen Position der Drahtführdüse 6 eine radiale Bewegung, eine Axialbewegung oder eine Kombination aus beidem erreicht wird. Die Verschiebung der Drahtführdüse 6 erfolgt an einer Verschiebestange 12. Die Drahtführdüse 6 weist ein Gelenk 11 auf, durch das sie zwischen verschiedenen Stellungen verschwenkbar ist. Um dies zu verdeutlichen sind in Fig. 2 zusätzlich zur Drahtführdüse 6, dem Gelenk 11 und der Verschiebestange 12 diese Elemente in einer zweiten Position gezeigt, wobei sie mit gestrichenen Bezugszeichen bezeichnet sind.

Die Bewicklungseinrichtung 1 weist zudem eine Rotationseinrichtung 13 zur Rotation des Statorträgers 5 und somit des daran befestigten Statorkörpers 3 beziehungsweise der Statorzähne 4 auf. Diese wird ebenfalls durch die Steuereinrichtung 10 angesteuert.

Um eine durchgängige Wicklung mehrerer Windungen des Spulendrahtes 2 zu ermöglichen, die anschließend parallel geschaltet werden sollen oder unabhängig voneinander ansteuerbar sein sollen, sind an der Bewicklungseinrichtung 1 mehrere Haltevorrichtungen 14 angeordnet. Das Aufbringen der Wicklungen und die Nutzung der Haltevorrichtungen 14 wird im Folgenden an einem in Fig. 1 dargestellten Beispiel erläutert.

Um den Spulendraht 2 im Rahmen der Wicklung zu führen, sind in den Statorkörper 3 axial mehrere Wicklungswerkzeuge 15 eingeführt und an den Statorzähnen 4 verklemmt. In einem nicht gezeigten Vorbereitungsschritt wird der Spulendraht 2 an einem Punkt des Statorträgers 5 befestigt, beispielsweise indem er mehrfach um eine der Haltevorrichtung 14 geführt wird. Anschließend wird, wie durch den Pfeil 16 dargestellt, die Drahtführdüse 6 radial in Richtung des Statorkörpers 3 geführt, bis eine Nut 17 zwischen zwei Statorzähnen 4 erreicht wird. Zu diesem Zeitpunkt wird die Drahtführdüse 6 an dem Gelenk 11 verschwenkt und axial in einer nicht dargestellten Bewegung entlang der Nut 17 geführt. Diese Bewegung wird fortgesetzt, bis sich die Drahtführdüse 6 in Axialrichtung jenseits des Wickelwerkzeugs 15 befindet. In dieser Position wird die Drahtführdüse 6 angehalten und die Steuereinrichtung 10 steuert die Rotationseinrichtung 13, um den Stratorträger 5 und somit auch den Statorkörper 3 und die Statorzähne 4 um die Rotationsachse 18 zu rotieren, womit die Drahtführdüse 6 bezüglich des Statorkörpers 4 in die durch den Pfeil 19 gezeigte Richtung verschoben wird. Am Endpunkt des Pfeiles 19 erfolgt erneut eine nichtgezeigte axiale Verschiebung der Drahtführdüse 6 entlang der entsprechenden Nut 17, bis die Drahtführdüse eine Position erreicht, die oberhalb des Statorkörpers 4 liegt, wonach die Drahtführdüse an dem Gelenk 11 verschwenkt und entlang dem Pfeil 20 geführt wird. Durch eine anschließende Rotation des Statorträgers 5 wird die Drahtführdüse 6 entlang dem Pfeil 21 geführt. Hiermit wird eine Wicklung des Spulendrahtes hergestellt, die durch die benachbart zum Wickelwerkzeug 15 verlaufenden Nuten 17 verläuft.

Die mit Bezug auf die Pfeile 16, 19, 20 und 21 erläuterten Schritte können wiederholt werden, um mehrere dieser Wicklungen zu erzeugen. Wie aus der vorangehenden Beschreibung hervorgeht, werden die Bewegungen der Drahtführdüse 6 und somit der Pfad des Spulendrahtes 2 mit Bezug auf den Statorkörper 3 beziehungsweise den Statorträger 5 erläutert. In dem drehfesten Koordinatensystem der Bewicklungseinrichtung 1 erfolgt die Verschiebung der Drahtführdüse 6 nur in der in Fig. 2 gezeigten Ebene. Verschiebungen senkrecht zu dieser Ebene werden durch eine entsprechende Rotation des Statorträgers 5 und somit auch des Stators erreicht.

Wurden so viele Wicklungen wie gewünscht aufgebracht, wird die Drahtführdüse 6 entlang des Pfeils 22 von dem Statorkörper 3 weggeführt, wonach sie durch eine Rotation des Statorträgers 5 um die Rotationsachse 18 entlang der Außenseite mehrerer der Haltevorrichtungen 14 geführt wird, wie durch den Pfeil 23 dargestellt ist. Die Pfeile 24, 25, 26 und 27 stellen die Bewegungen der Drahtführdüse 6 in der Bildebene der Fig. 1 dar, um Wicklungen in weitere Nuten 17 einzubringen. Die Bewegung der Drahtführdüse 6 beziehungsweise die Rotation des Statorträgers 5 erfolgt dabei, wie bereits zu den Pfeilen 16, 19, 20, 21 erläutert. Nach Aufbringen mehrerer Wicklungen wird die Drahtführdüse 6, wie durch den Pfeil 28 dargestellt ist, erneut von dem Statorkörper 4 weggeführt und wie durch die Pfeile 29, 30, 31, 32 dargestellt ist entlang der Außenseite mehrerer der Haltevorrichtungen 14 geführt und um eine der Haltevorrichtungen 14 geschlungen. Anschließend können, wie durch den Pfeil 33 angedeutet ist, weitere Wicklungen auf die Statorzähne 4 des Statorkörpers 3 aufgebracht werden.

Die Führung der Drahtführdüse 6 und somit des Spulendrahtes 2 entlang der Außenseite mehrerer der Haltevorrichtungen 14 ermöglicht es einerseits, den Draht beabstandet vom Statorkörper 3 zu führen, womit er beim Aufbringen weiterer Wicklungen nicht stört. Zudem wird durch diese randseitige Führung erreicht, dass der Spulendraht 2 nach dem Wickelvorgang automatisch durch eine Trennvorrichtung 34 der Bewicklungseinrichtung 1 oder in einem nachfolgenden Bearbeitungsschritt an vorgegebenen Trennstellen getrennt werden kann. Wird der Spulendraht 2 beispielsweise an der Trennstelle 35 getrennt, können die beiden Spulen, deren Wicklung in Fig. 1 dargestellt sind, in folgenden Verarbeitungsschritten getrennt verschaltet werden oder parallel geschaltet werden. Wird der Spulendraht 2 hingegen an der Trennstelle 36 getrennt, bleiben die gewickelten Spulen in Serie geschaltet und nur die weiteren Spulen, deren Wicklung durch den Pfeil 33 angedeutet ist, sind getrennt verschaltbar.

Die Steuereinrichtung 10 kann den Wickelvorgang derart steuern, dass zwischen der letzten vor einer Trennstelle 35, 36 durchgeführten Wicklung und der Trennstelle 35, 36 eine vorgegebene Mindestlänge vom Spulendraht 2 liegt. Dies kann erreicht werden, indem der Spulendraht 2 entlang der Außenseite mehrerer der Haltevorrichtungen 14 geführt oder um einzelne oder Gruppen von Haltevorrichtungen 14 geschlungen wird. Die Haltevorrichtungen 14 weisen jeweils mehrere separate konkave Aufnahmebereiche 37 auf, in denen der Spulendraht 2 aufnehmbar ist. Hierdurch können beispielsweise Gruppen von Spulendrähten 2, die anschließend geschnitten werden sollen, um separat oder parallel beschaltbare Wicklungen bereit zu stellen, von solchen getrennt werden, die verbunden bleiben sollen. Auch eine anschließende Nachverarbeitung, beispielsweise ein Bündeln von Spulendrähten 2, kann hierdurch erleichtert werden.

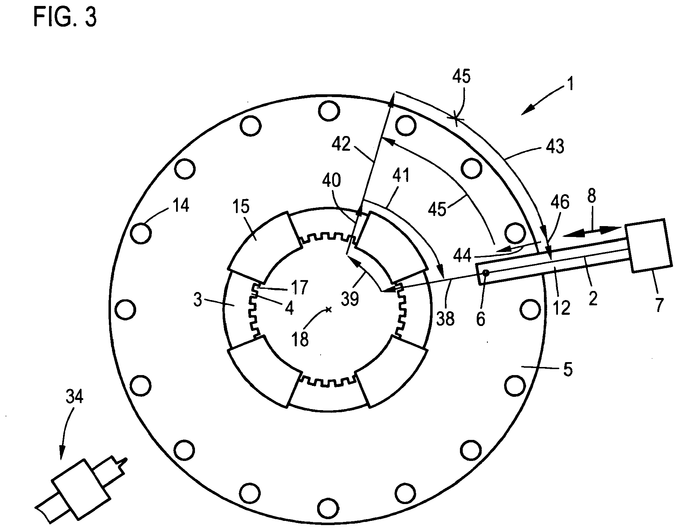

Fig. 3 zeigt die bereits in Fig. 1 und 2 dargestellte Bewicklungseinrichtung 1, wobei ein weiteres Beispiel zum Einbringen mehrerer Wicklungen dargestellt wird, in dem mehrere, anschließend parallel zu schaltende Spulendrähte 2 in die gleichen Nuten 17 eingebracht werden. Hierzu wird zunächst die Drahtführdüse 6 entlang dem durch die Pfeile 38, 39, 40 und 41 gezeigten Pfad geführt. Am Ende der Pfeile 38 und 39 erfolgt, wie bereits zu den Pfeilen 16, 19, 20, 21 in Fig. 1 erläutert, eine zusätzliche axiale Verschiebung der Drahtführdüse 6, um den Spulendraht 2 durch die Nuten 17 zu führen. Es werden somit zunächst mehrere Wicklungen in die Nuten 17 eingebracht, die im finalen Stator in Serie geschaltet bleiben sollen. Nach Aufbringen dieser mehreren Wicklungen wird die Drahtführdüse 6 entlang des Pfeils 42 axial vom Statorkörper 3 weggeführt und entlang dem Pfeil 43 durch Rotation des Statorträgers 5 entlang der Außenseiten mehrerer der Haltevorrichtungen 14 geführt. Anschließend kann der Spulendraht 2 mehrfach um die Haltevorrichtungen 14 geschlungen werden, wie durch die Pfeile 44, 45 dargestellt ist. Es kann somit eine vorgegebene Solllänge des Spulendrahtes 2 beabstandet von dem Statorkörper 3 zwischen den Haltevorrichtungen 14 verspannt werden, um beispielsweise einen Kontakt für die Spule mit vorgegebener Länge bereitzustellen. Anschließen kann die Drahtführdüse 6 entlang des Pfeils 46 in die Ausgangsposition zurückgeführt werden, wonach das beschriebene Vorgehen mehrfach wiederholt wird.

Aus diesem Vorgehen resultieren mehrere Gruppen von Wicklungen des Spulendrahtes 2 in den gleichen Nuten 17, zwischen denen der Spulendraht 2 jeweils vom Statorkörper 3 weggeführt und um die Haltevorrichtungen 14 geschlungen ist. Das Schlingen um die Haltevorrichtung 14, dass durch die Pfeile 42, 43, 44, 45 dargestellt ist, erfolgt vorzugsweise jeweils so, dass der Spulendraht 2 bei einer der Führungen entlang dem Pfeil 45 in einem ersten Aufnahmebereich 37 der Haltevorrichtungen 14 abgelegt wird und bei allen anderen Führungen entlang dem Pfeil 43 der gleichen Umschlingung der Haltevorrichtungen 14 in einem axial dazu beabstandeten zweiten Aufnahmebereich 37 abgelegt wird. Wird durch die Trennvorrichtung 34 anschließend jenes Drahtbündel getrennt, das in dem ersten Aufnahmebereich 37 gehaltert ist, so wird für jede Gruppe von Wicklungen der Spulendraht 2 einmal getrennt, womit jede der Gruppen von Wicklungen separat kontaktierbar ist. Durch das mehrfache Umschlingen der Haltevorrichtung 14 werden ausreichend lange Anschlussleitungen bereitgestellt.

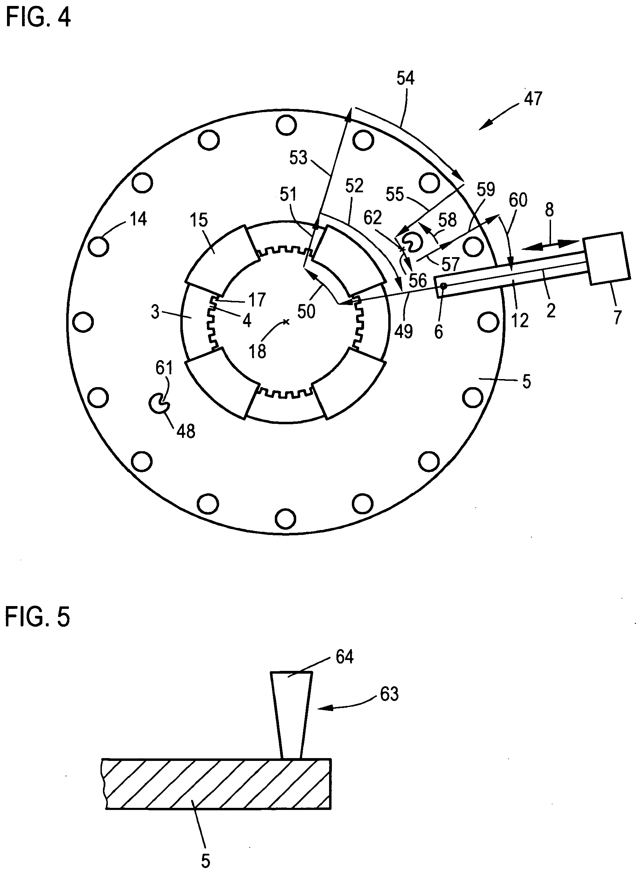

Fig. 4 zeigt ein weiteres Ausführungsbeispiel einer Bewicklungseinrichtung 47 zum Aufbringen mehrerer Wicklungen eines Spulendrahtes 2 auf einen Statorkörper 3. Der Aufbau der Bewicklungseinrichtung 47 ist in weiten Teilen identisch zum Aufbau der in den Figuren 1 bis 3 dargestellten Bewicklungseinrichtung 1. Daher sind die einander entsprechenden Komponenten mit gleichen Bezugszeichen bezeichnet. Die Bewicklungseinrichtung 47 unterscheidet sich dadurch von der Bewicklungseinrichtung 1, dass sie zusätzlich mehrere an dem Statorträger 5 angeordnete Umlenkvorrichtungen 48 umfasst. Durch diese kann die vom Statorkörper 3 beabstandete Verspannung des Spulendrahtes 2 zwischen den Wicklungen weiter verbessert werden und insbesondere ein Trennen des Spulendrahtes 2 erleichtert werden.

Ein Beispiel für die Nutzung dieser Umlenkvorrichtungen 48 im Rahmen des Aufbringens von Wicklungen ist durch die Pfeile 49 bis 60 dargestellt. In diesem Beispiel sollen, wie bereits zu Fig. 3 erläutert, mehrere Wicklungen in die gleichen Nuten 17 eingebracht werden, wobei anschließend Teile dieser Wicklungen parallel geschaltet werden sollen. Hierzu werden zunächst, wie durch die Pfeile 49, 50, 51, 52 dargestellt, mehrere Wicklungen in die Nuten 17 eingebracht. Das Vorgehen hierbei entspricht dem zu Fig. 1 und 3 erläuterten Vorgehen. Anschließend wird die Drahtführdüse 6 entlang dem Pfeil 53 von dem Statorkörper 3 weggeführt und gemäß dem Pfeil 54 durch eine Rotation des Statorträgers 5 entlang der Außenseite mehrerer der Haltevorrichtungen 14 geführt. Anschließend wird der Spulendraht 2 durch eine Verschiebung der Drahtführdüse 6 radial in Richtung des Statorkörpers 3 entlang dem Pfeil 55 geführt, wonach er gemäß dem Pfeil 56 durch eine Rotation des Statorträgers 5 um die Rotationsachse 18 entlang einer dem Statorkörper 3 zugewandten Innenseite einer der Umlenkvorrichtungen 48 geführt wird. Anschließend kann der Spulendraht 2, wie durch die Pfeile 57 und 58 dargestellt ist, um die Umlenkvorrichtung 48 geschlungen und anschließend entlang der Pfeile 59, 60 in die Ausgangsposition zurückgeführt werden, wonach die vorangehend beschriebenen Schritte wiederholt werden können, um eine oder mehrere weitere Gruppen von Wicklungen in die Nuten 17 einzubringen.

Das Trennen der einzelnen Gruppen von Wicklungen, die zunächst durchgängig mit einem Spulendraht 2 gewickelt sind, also seriell geschaltet sind, kann erfolgen, indem der Spulendraht 2 beziehungsweise das Bündel von Spulendrähten 2 an der Position 62 durchtrennt wird. Diese Trennung ist besonders einfach dadurch möglich, dass an der Innenseite der Umlenkvorrichtung 48 eine Ausnehmung 61 vorgesehen ist, in die eine Trennvorrichtung zum Trennen der Spulendrähte eingreifen kann. Nach dem Trennen der Spulendrähte 2 können die Spulengruppen parallel geschaltet werden.

Fig. 5 zeigt eine Detailansicht eines weiteren Ausführungsbeispiel einer Bewicklungseinrichtung zum Aufbringen mehrerer Wicklungen eines Spulendrahtes 2 auf einen Statorkörper 3. Diese unterscheidet sich von den in den vorangehenden Figuren gezeigten Bewicklungseinrichtungen 1, 47 dadurch, dass die Haltevorrichtungen 64 anders geformt sind. Die Außenfläche 63 der Haltevorrichtungen 64 ist angeschrägt und steht somit gewinkelt zu der Oberfläche des Statorträgers 5. Hierdurch kann verhindert werden, dass der Spulendraht 2 von der Haltevorrichtung 64 abrutscht, ohne das eine komplexe Formung der Haltevorrichtung 64 erforderlich ist.

## Patentansprüche

1. Verfahren zur Herstellung eines Stators für eine elektrische Maschine, wobei durch Nadelwickeln mit einer Bewicklungseinrichtung (1, 47) mehrere Wicklungen eines Spulendrahtes (2) auf radial von einem im Wesentlichen hohlzylinderförmigen Statorkörper (3) abstehende Statorzähne (4) aufgebracht werden, wobei die Bewicklungseinrichtung (1, 47) einen Statorträger (5) und eine Drahtführdüse (6) zur Führung des Spulendrahtes (2) zu dem Statorkörper (3) umfasst, wobei der Statorkörper (3) drehfest an dem Statorträger (5) und der aus der Drahtführdüse (6) geführte Spulendraht (2) an dem Statorkörper (3) und/oder an dem Statorträger (5) befestigt wird, wonach die Wicklungen auf die Statorzähne (4) gewickelt werden, indem wiederholt abwechselnd Rotationen des Statorträgers (5) um eine axial bezüglich des Statorkörpers (4) verlaufende Rotationsachse (18) und Verschiebungen der Drahtführdüse (6) zur Führung des Spulendrahtes (2) durch jeweils eine zwischen jeweils zwei der Statorzähne (4) verlaufende Nut (17) durchgeführt werden,
**dadurch gekennzeichnet,**
**dass** der Statorträger (5) mehrere Haltevorrichtungen (14, 64) umfasst, wobei zwischen wenigstens zwei der Wicklungen des Spulendrahtes (2) um die jeweiligen Statorzähne (4) der Spulendraht (2) durch eine Verschiebung der Drahtführdüse (6) radial von dem Statorkörper (3) weggeführt wird, wonach er durch eine Rotation des Statorträgers (5) um die Rotationsachse (18) entlang einer von dem Statorkörper (3) abgewandten Außenseite wenigstens einer der Haltevorrichtungen (14, 64) geführt wird.

2. Verfahren nach Anspruch 1,
**dadurch gekennzeichnet,**
**dass** ein Stator hergestellt wird, der mehrere parallel geschaltete und/oder unabhängig voneinander beschaltbare Gruppen der Wicklungen umfasst, wobei die Wicklungen innerhalb jeder Gruppe in Serie geschaltet sind, wobei die Wicklungen wenigstens zweier der Gruppen zunächst gemeinsam mit einem durchgängigen Spulendraht (2) gewickelt werden, wobei die Wicklungen jeweils einer der Gruppen zeitlich aufeinanderfolgend gewickelt werden, wobei der Spulendraht (2) nach der jeweils letzten Wicklung jeder Gruppe an der Außenseite wenigstens einer der Haltevorrichtungen (14, 64) vorbeigeführt wird.

3. Verfahren nach Anspruch 1 oder 2, **dadurch gekennzeichnet, dass** als Haltevorrichtungen (14) solche verwendet werden, die auf der Außenseite mehrere separate konkave Aufnahmebereiche (37) aufweisen, in die der Spulendraht (2) einlegbar ist.

4. Verfahren nach Anspruch 3,
**dadurch gekennzeichnet,**
**dass** der Spulendraht (2) nach wenigstens zwei verschiedenen Wicklungen an der Außenseite der gleichen Haltevorrichtung (14) vorbeigeführt wird, wobei die relative Lage der Haltevorrichtung (14) und der Drahtführdüse (6) derart angepasst wird, dass der Spulendraht (2) in verschiedenen Aufnahmebereichen (37) abgelegt wird.

5. Verfahren nach einem der vorangehenden Ansprüche,
**dadurch gekennzeichnet,**
**dass** ein Statorträger (5) verwendet wird, der zusätzlich eine Umlenkvorrichtung (48) oder mehrere Umlenkvorrichtungen (48) umfasst, wobei wenigstens einmal während des Aufbringens der Wicklungen, nachdem der Spulendraht (2) an der Außenseite einer der Haltevorrichtungen (14, 64) vorbeigeführt wurde, der Spulendraht (2) durch eine Verschiebung der Drahtführdüse (6) radial in Richtung des Statorkörpers (4) geführt wird, wonach er durch eine Rotationen des Statorträgers (5) um die Rotationsachse (18) entlang einer dem Statorkörper (4) zugewandten Innenseite der Umlenkvorrichtung (48) oder wenigstens einer der Umlenkvorrichtungen (48) geführt wird.

6. Verfahren nach einem der vorangehenden Ansprüche,
**dadurch gekennzeichnet,**
**dass** der Spulendraht (2) nach dem Aufbringen der Wicklungen an wenigstens einer Trennstelle (35, 36, 45, 64) zwischen jeweils zwei der Wicklungen automatisch durch eine Trennvorrichtung (34) getrennt wird.

7. Verfahren nach Anspruch 6,
**dadurch gekennzeichnet,**
**dass** die Trennung an einer Trennstelle (35, 36, 45, 64) durchgeführt wird, an der der Spulendraht zwischen zwei Haltevorrichtungen (14, 64) oder zwischen einer Haltevorrichtung (14, 64) und einer Umlenkvorrichtung (48) gespannt ist, oder an der der Spulendraht (2) über eine Ausnehmung (61) einer Umlenkvorrichtung (48) oder einer Haltevorrichtung (14, 64) geführt ist.

8. Verfahren nach einem der vorangehenden Ansprüche,
**dadurch gekennzeichnet,**
**dass** zwischen wenigstens zwei der Wicklungen des Spulendrahtes (2) um die jeweiligen Statorzähne (4) der Spulendraht (2) durch eine Verschiebung der Drahtführdüse (6) radial von dem Statorkörper (4) weggeführt wird, wonach eine vorgegebene Sollänge des Spulendrahtes (2) beabstandet von dem Statorkörper (4) zwischen den Haltevorrichtungen (14, 64) und/oder der Umlenkvorrichtung (48) oder den Umlenkvorrichtungen (48) verspannt wird.

9. Bewicklungseinrichtung zum Aufbringen mehrerer Wicklungen eines Spulendrahtes (2) auf radial von einem im Wesentlichen hohlzylinderförmigen Statorkörper (3) abstehende Statorzähne (4), wobei die Bewicklungseinrichtung (1, 47) einen Statorträger (5), an dem der Statorkörper (3) drehfest befestigbar ist, eine Drahtführdüse (6) zur Führung eines Spulendrahtes (2) zu dem Statorkörper (3), eine Verschiebeeinrichtung (7) zur Verschiebung der Drahtführdüse (6), eine Rotationseinrichtung (13) zur Rotation des Statorträgers (5) um eine Rotationsachse (18) und eine Steuereinrichtung (10) zur Steuerung der Verschiebeeinrichtung (7) und der Rotationseinrichtung (13) umfasst,
**dadurch gekennzeichnet,**
**dass** an dem Statorträger (5) mehrere Haltevorrichtungen (14, 64) angeordnet sind, wobei die Bewicklungseinrichtung (1) zur Durchführung des Verfahrens nach einem der vorangehenden Ansprüche ausgebildet ist und wobei die Steuereinrichtung (10) dazu ausgebildet ist, die Verschiebeeinrichtung (7) und die Rotationseinrichtung (13) zur Durchführung der verfahrensgemäßen Rotationen des Statorträgers (5) und Verschiebungen der Drahtführdüse (6) anzusteuern.

10. Bewicklungseinrichtung nach Anspruch 9,
**dadurch gekennzeichnet,**
**dass** die Haltevorrichtungen (14, 64) kreisförmig um die Rotationsachse (18) angeordnet sind.

11. Bewicklungseinrichtung nach Anspruch 9 oder 10,
**dadurch gekennzeichnet,**
**dass** an dem Statorträger (5) wenigstens eine Umlenkvorrichtung (48) angeordnet ist, wobei der Abstand der Umlenkvorrichtung (48) von der Rotationsachse (18) geringer ist als der jeweilige Abstand der Haltevorrichtungen (14, 64) von der Rotationsachse (18).

12. Bewicklungseinrichtung nach Anspruch 11, **dadurch gekennzeichnet, dass** die Umlenkvorrichtung (48) an ihrer der Rotationsachse (18) zugewandten Innenseite eine Ausnehmung (61) aufweist, über die der Spulendraht (2) spannbar ist.

13. Bewicklungseinrichtung nach einem der Ansprüche 9 bis 12,
**dadurch gekennzeichnet,**
**dass** wenigstens ein Abschnitt einer von der Rotationsachse (18) abgewandten Außenfläche (63) der Haltevorrichtungen (14, 64) jeweils einzeln oder gemeinsam mit dem Statorträger (5) wenigstens einen konkaven Aufnahmebereich (37) für den Spulendraht (2) ausbildet.

## Claims

1. Method for producing a stator for an electric machine, wherein a plurality of windings of a coil wire (2) are applied onto stator teeth (4) that project radially from an essentially hollow-cylindrical stator body (3) by needle winding with a winding device (1, 47), wherein the winding device (1, 47) comprises a stator carrier (5) and a wire guiding nozzle (6) for guiding the coil wire (2) to the stator body (3), wherein the stator body (3) is fixed in a non-rotatable manner onto the stator carrier (5) and the coil wire (2) guided from the wire guiding nozzle (6) is fixed onto the stator body (3) and/or onto the stator carrier (5), after which the windings are wound onto the stator teeth (4), in that repeatedly alternating rotations of the stator carrier (5) about an axis of rotation (18) extending axially with respect to the stator body (4) and displacements of the wire guiding nozzle (6) for guiding the coil wire (2) are guided through a respective groove (17) extending between two of the stator teeth (4) respectively,
**characterised in that**
the stator carrier (5) comprises a plurality of holding devices (14, 64), wherein between at least two of the windings of the coil wire (2) around the respective stator teeth (4) the coil wire (2) is guided radially away from the stator body (3) by a displacement of the wire guiding nozzle (6), after which it is guided by a rotation of the stator carrier (5) about the axis of rotation (18) along an outer face of at least of one of the holding devices (14, 64) facing away from the stator body (3).

2. Method according to claim 1,
**characterised in that**
a stator is produced which comprises a plurality of groups of windings which are connected in parallel and/or can be connected independently of one another, wherein the windings within each group are connected in series, wherein the windings of at least two of the groups are firstly wound together with a continuous coil wire (2), wherein the windings of the respective groups are wound successively in time, wherein the coil wire (2) is guided past the outside of at least one of the holding devices (14, 64) after the respective last winding of each group.

3. Method according to claim 1 or 2,
**characterised in that**
the holding devices (14) used are those which have on the outside a plurality of separate concave receiving regions (37) into which the coil wire (2) can be inserted.

4. Method according to claim 3,
**characterised in that**
the coil wire (2) is guided past the outside of the same holding device (14) after at least two different windings, wherein the relative position of the holding device (14) and the wire guiding nozzle (6) are adjusted in such a way that the coil wire (2) is deposited in different receiving regions (37).

5. Method according to any of the preceding claims,
**characterised in that**
a stator carrier (5) is used which additionally comprises a deflection device (48) or a plurality of deflection devices (48), wherein at least once during the application of the windings, after the coil wire (2) has passed the outside of one of the holding devices (14, 64), the coil wire (2) is guided radially in the direction of the stator body (4) by a displacement of the wire guiding nozzle (6), after which it is guided by a rotation of the stator carrier (5) about the axis of rotation (18) along an inner side of the deflection device (48) or at least one of the deflection devices (48) facing the stator body (4).

6. Method according to any of the preceding claims,
**characterised in that**
the coil wire (2), after the windings have been applied, is automatically separated by a separation device (34) at at least one separation point (35, 36, 45, 64) between two of the windings.

7. Method according to claim 6,
**characterised in that**
the separation is carried out at a separation point (35, 36, 45, 64) at which the coil wire is tensioned between two holding devices (14, 64) or between a holding device (14, 64) and a deflection device (48), or at which the coil wire (2) is guided over a recess (61) of a deflection device (48) or a holding device (14, 64).

8. Method according to any of the preceding claims,
**characterised in that**
between at least two of the windings of the coil wire (2) around the respective stator teeth (4) the coil wire (2) is guided radially away from the stator body (4) by a displacement of the wire guiding nozzle (6), after which a predetermined desired length of the coil wire (2) is tensioned at a distance from the stator body (4) between the holding devices (14, 64) and/or the deflection device (48) or the deflection devices (48).

9. Winding device for applying a plurality of windings of a coil wire (2) to stator teeth (4) projecting radially from a substantially hollow-cylindrical stator body (3), wherein the winding device (1, 47) comprises a stator carrier (5), to which the stator body (3) can be fastened in a rotationally fixed manner, a wire guiding nozzle (6) for guiding a coil wire (2) to the stator body (3), a displacement device (7) for displacing the wire guiding nozzle (6), a rotation device (13) for rotating the stator carrier (5) about an axis of rotation (18) and a control device (10) for controlling the displacement device (7) and the rotation device (13),
**characterised in that**
on the stator carrier (5) a plurality of holding devices (14, 64) are arranged, wherein the winding device (1) is designed for performing the method according to any of the preceding claims, and wherein the control device (10) is configured to control the displacement device (7) and the rotation device (13) for performing the rotations of the stator carrier (5) and displacements of the wire guiding nozzle (6) according to the method.

10. Winding device according to claim 9,
**characterised in that**
the holding devices (14, 64) are arranged in a circle around the axis of rotation (18).

11. Winding device according to claim 9 or 10,
**characterised in that**
at least one deflection device (48) is arranged on the stator carrier (5), wherein the distance of the deflection device (48) from the axis of rotation (18) is smaller than the respective distance of the holding devices (14, 64) from the axis of rotation (18).

12. Winding device according to claim 11, **characterised in that** the deflection device (48) has a recess (61) on its inner side facing the axis of rotation (18) via which recess the coil wire (2) can be tensioned.

13. Winding device according to any of claims 9 to 12,
**characterised in that**
at least a portion of an outer surface (63) of the holding devices (14, 64) facing away from the axis of rotation (18) forms, in each case individually or together with the stator carrier (5), at least one concave receiving region (37) for the coil wire (2).

## Revendications

1. Procédé de fabrication d'un stator destiné à une machine électrique, dans lequel plusieurs enroulements d'un fil de bobine (2) sont appliqués grâce à un bobinage par broches avec un appareil de bobinage (1, 47) sur des dents de stator (4) faisant saillie radialement à partir d'un corps de stator (3) essentiellement cylindrique creux, dans lequel l'appareil de bobinage (1, 47) comprend un support de stator (5) et une buse de guidage de fil (6) permettant de guider le fil de bobine (2) vers le corps de stator (3), dans lequel le corps de stator (3) est fixé de manière solidaire en rotation au support de stator (5) et le fil de bobine (2) guidé hors de la buse de guidage de fil (6) est fixé au corps de stator (3) et/ou au support de stator (5), puis les enroulements sont bobinés sur les dents de stator (4) en réalisant des rotations alternées répétées du support de stator (5) autour d'un axe de rotation (18) s'étendant axialement par rapport au corps de stator (4) et des déplacements de la buse de guidage de fil (6) afin de guider le fil de bobine (2) à travers respectivement une rainure (17) s'étendant entre respectivement deux des dents de stator (4),
**caractérisé en ce que**
le support de stator (5) comprend plusieurs dispositifs de retenue (14, 64), dans lequel le fil de bobine (2) est guidé autour des dents de stator (4) respectives entre au moins deux des enroulements du fil de bobine (2) grâce à un déplacement de la buse de guidage de fil (6) l'éloignant radialement du corps de stator (3), puis il est guidé le long d'un côté extérieur, détourné du corps de stator (3), d'au moins un des dispositifs de retenue (14, 64) grâce à une rotation du support de stator (5) autour de l'axe de rotation (18).

2. Procédé selon la revendication 1,
**caractérisé en ce que**
un stator présentant plusieurs groupes d'enroulements montés en parallèle et/ou pouvant être montés indépendamment les uns des autres est produit, dans lequel les enroulements au sein de chaque groupe sont montés en série, dans lequel les enroulements d'au moins deux des groupes sont d'abord enroulés conjointement avec un fil de bobine (2) continu, dans lequel les enroulements de respectivement un des groupes sont enroulés de manière temporellement successive, dans lequel le fil de bobine (2) est guidé en le faisant passer devant le côté extérieur d'au moins un des dispositifs de retenue (14, 64) après le dernier enroulement respectif de chaque groupe.

3. Procédé selon la revendication 1 ou 2, **caractérisé en ce que** des dispositifs de retenue présentant sur le côté extérieur plusieurs régions de réception (37) concaves séparées au sein desquelles le fil de bobine (2) peut être mis en place sont utilisés comme dispositifs de retenue (14).

4. Procédé selon la revendication 3
**caractérisé en ce que**
le fil de bobine (2) est guidé en le faisant passer devant le côté extérieur du même dispositif de retenue (14) après au moins deux enroulements différents, dans lequel la position relative du dispositif de retenue (14) et de la buse de guidage de fil (6) est adaptée de telle manière que le fil de bobine (2) est déposé dans des régions de réception (37) différentes.

5. Procédé selon l'une quelconque des revendications précédentes,
**caractérisé en ce que**
un support de stator (5) comprenant en outre un dispositif de déviation (48) ou plusieurs dispositifs de déviation (48) est utilisé, dans lequel le fil de bobine (2) est guidé radialement en direction du corps de stator (4) grâce à un déplacement de la buse de guidage de fil (6) au moins une fois pendant l'application des enroulements après que le fil de bobine (2) a été guidé en le faisant passer devant le côté extérieur d'un des dispositifs de retenue (14, 64), puis il est guidé grâce à une rotation du support de stator (5) autour de l'axe de rotation (18) le long d'un côté intérieur, tourné vers le corps de stator (4), du dispositif de déviation (48) ou d'au moins un des dispositifs de déviation (48).

6. Procédé selon l'une quelconque des revendications précédentes,
**caractérisé en ce que**
après l'application des enroulements, le fil de bobine (2) est séparé de manière automatique grâce à un dispositif de séparation (34) au niveau d'au moins un emplacement de séparation (35, 36, 45, 64) entre respectivement deux des enroulements.

7. Procédé selon la revendication 6,
**caractérisé en ce que**
la séparation est mise en œuvre au niveau d'un emplacement de séparation (35, 36, 45, 64) au niveau duquel le fil de bobine est tendu entre deux dispositifs de retenue (14, 64) ou entre un dispositif de retenue (14, 64) et un dispositif de déviation (48), ou au niveau duquel le fil de bobine (2) est guidé au-dessus d'un évidement (61) d'un dispositif de déviation (48) ou d'un dispositif de retenue (14, 64).

8. Procédé selon l'une quelconque des revendications précédentes,
**caractérisé en ce que**
le fil de bobine (2) est guidé autour des dents de stator (4) respectives entre au moins deux des enroulements du fil de bobine (2) grâce à un déplacement de la buse de guidage de fil (6) l'éloignant radialement du corps de stator (4), puis une longueur souhaitée prédéfinie du fil de bobine (2) est tendue à distance du corps de stator (4) entre les dispositifs de retenue (14, 64) et/ou le dispositif de déviation (48) ou les dispositifs de déviation (48).

9. Dispositif de bobinage permettant d'appliquer plusieurs enroulements d'un fil de bobine (2) sur des dents de stator (4) faisant saillie radialement à partir d'un corps de stator (3) essentiellement cylindrique creux, dans lequel l'appareil de bobinage (1, 47) comprenant un support de stator (5) auquel le corps de stator (3) peut être fixé de manière solidaire en rotation, une buse de guidage de fil (6) permettant de guider un fil de bobine (2) vers le corps de stator (3), un appareil de déplacement (7) permettant de déplacer la buse de guidage de fil (6), un appareil de rotation (13) permettant de faire tourner le support de stator (5) autour d'un axe de rotation (18) et un dispositif de commande (10) permettant de commander l'appareil de déplacement (7) et l'appareil de rotation (13),
**caractérisé en ce que**
plusieurs dispositifs de retenue (14, 64) sont agencés sur le support de stator (5), dans lequel l'appareil de bobinage (1) est conçu pour mettre en œuvre le procédé selon l'une quelconque des revendications précédentes, et dans lequel le dispositif de commande (10) est conçu pour commander l'appareil de déplacement (7) et l'appareil de rotation (13) afin de mettre en œuvre les rotations du support de stator (5) et les déplacements de la buse de guidage de fil (6) conformément au procédé.

10. Dispositif de bobinage selon la revendication 9,
**caractérisé en ce que**
les dispositifs de retenue (14, 64) sont agencés de manière circulaire autour de l'axe de rotation (18).

11. Dispositif de bobinage selon la revendication 9 ou 10,
**caractérisé en ce que**
au moins un dispositif de déviation (48) est agencé sur le support de stator (5), dans lequel la distance du dispositif de déviation (48) par rapport à l'axe de rotation (18) est inférieure à la distance respective des dispositifs de retenue (14, 64) par rapport à l'axe de rotation (18).

12. Dispositif de bobinage selon la revendication 11,
**caractérisé en ce que** le dispositif de déviation (48) présente sur son côté intérieur tournée vers l'axe de rotation (18) un évidement (61) au-dessus duquel le fil de bobine (2) peut être tendu.

13. Dispositif de bobinage selon l'une quelconque des revendications 9 à 12,
**caractérisé en ce que**
au moins une section d'une surface extérieure (63), détournée de l'axe de rotation (18), des dispositifs de retenue (14, 64) forme, individuellement ou avec le support de stator (5), au moins une région de réception (37) concave pour le fil de bobine (2).
